(19) Europäisches Patentamt
European Patent Office
Office européen des brevets

(11) EP 2 364 846 B1

(12) EUROPÄISCHE PATENTSCHRIFT

(45) Veröffentlichungstag und Bekanntmachung des Hinweises auf die Patenterteilung:
**12.12.2012 Patentblatt 2012/50**

(21) Anmeldenummer: **11000839.8**

(22) Anmeldetag: **03.02.2011**

(51) Int Cl.:
***B32B 27/18*** *(2006.01)* ***B32B 27/20*** *(2006.01)*
***B32B 27/36*** *(2006.01)* ***A01G 9/14*** *(2006.01)*
***A01G 9/22*** *(2006.01)* ***E06B 9/24*** *(2006.01)*
***E06B 9/26*** *(2006.01)*

(54) **Mehrschichtige Polyesterfolie hoher optischer Dichte mit einer Gesamtdicke von maximal 60 μm mit zwei weißen Außenschichten und einer rußhaltigen Basisschicht**

Multilayer polyester film of high optical density, having a total thickness of maximum 60 μm and comprising two external white layers and a basis layer containing carbon black

Film de polyester multicouche d' une densité optique élevée ayant une épaisseur totale de 60 μm maximum avec deux couches extérieures blanches et une couche de base contenant du noir de carbone

(84) Benannte Vertragsstaaten:
**DE FR GB IT LU SE**

(30) Priorität: **05.02.2010 DE 102010007140**

(43) Veröffentlichungstag der Anmeldung:
**14.09.2011 Patentblatt 2011/37**

(73) Patentinhaber: **Mitsubishi Polyester Film GmbH
65203 Wiesbaden (DE)**

(72) Erfinder:
- **Kliesch, Holger, Dr.
65462 Ginsheim-Gustavsburg (DE)**
- **Kuhmann, Bodo
65594 Runkel (DE)**
- **Bröder, Dirk, Dr.
55444 Schweppenhausen (DE)**
- **Fischer, Ingo
65558 Heistenbach (DE)**

(74) Vertreter: **Schweitzer, Klaus
Plate Schweitzer Zounek
Patentanwälte
Rheingaustrasse 196
65203 Wiesbaden (DE)**

(56) Entgegenhaltungen:
**EP-A1- 2 000 498 WO-A1-01/53395
US-A1- 2007 054 141**

- **DATABASE WPI Week 198842 Thomson Scientific, London, GB; AN 1988-297985 XP002647201, & JP 63 220421 A (TORAY IND INC) 13. September 1988 (1988-09-13)**

EP 2 364 846 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine mehrschichtige, biaxial orientierte Polyesterfolie, die eine sehr niedrige Transparenz respektive eine hohe optische Dichte (OD) und zwei weiße Außenschichten aufweist. Die Erfindung betrifft weiterhin ein Verfahren für die Herstellung der Folie und ihre Verwendung.

Folien mit hoher optischer Dichte (OD) von > 3,5 bzw. sehr geringer Transparenz von < 0,1 % werden beispielsweise im Bereich von Gewächshäuser für Schattenmatten benötigt, wobei die Schattenmatten hierbei ein Eindringen von Tageslicht verhindern und sich so mit Kunstlicht unabhängig vom Umgebungslicht unterschiedliche Tag/Nacht-Zeiten einstellen lassen. Zudem verhindern solche Schattenmatten eine Beeinträchtigung der Umgebung des Gewächshauses durch starkes Kunstlicht in der Nacht. Eine weitere wichtige Einsatzmöglichkeit liegt im Bereich von Rollos und Jalousien, die zur Verdunklung eingesetzt werden sollen. Weiterhin eignen sich solche Folien für einen Einsatz in Projektionsleinwänden und als Folien in Displayanwendungen, beispielsweise für Mobiltelefone.

Insbesondere die ersten beiden Einsatzgebiete (Schattenmatten und Rollos) und letzteres (Displays) stellen jedoch erhebliche weitere Anforderungen an die Folie. So darf diese nicht dicker als 60 μm sein, da sie sonst zu unflexibel (oder ganz einfach zu dick) für die Endanwendungen ist, und zudem muss Sie eine gewisse UV-Stabilität aufweisen, um für einen Dauereinsatz geeignet zu sein.

Außerdem ist es mindestens in den beiden erstgenannten Anwendungen zudem wünschenswert, wenn die Folie schwer entzündlich ist und idealerweise ohne Stützfeuer selbst verlischt, um nicht zur Ausbreitung von Bränden in Gewächshäusern und anderen Gebäuden beizutragen.

Die Folien müssen zudem beidseitig weiß sein, um einen möglichst großen Teil des auftreffenden Lichtes zu reflektieren, unter anderen, um ein Aufheizen des Materials selbst zu verhindern und zur Energieeffizienz beizutragen. Wichtig ist also ein hoher Weißgrad in Reflektion bzw. eine hohe Helligkeit in Reflektion.

Die Folie soll sich zudem wirtschaftlich auf existierenden Polyesterfolien-Mehrschichtanlagen herstellen lassen. Diese weisen im Dickenbereich bis 75 μm in der Regel einen Basisextruder, geeignet für hohe Durchsätze, und ein bis zwei Extruder für die Deckschichten, geeignet für deutlich niedrigere Durchsätze, auf.

Beidseitig weiße Folien mit hoher optischer Dichte sind zum Beispiel in der JP-A-63-220421 (Toray Ind. Inc.) oder auch in US-A-2007/0054141 (DuPont Films) beschrieben.

Die US-A-2007/0054141 offenbart zwar allgemein Folien einer Dicke von 12 bis 350 μm (bevorzugt 100 bis 175 μm), weist aber nur Beispiele für Foliendicken von kleiner/gleich 100 μm auf. Auch die JP-A-63-220421 beschreibt nur Folien mit einer Dicke von deutlich über 100 μm und lehrt zudem, dass die Deckschichten mindestens 20 μm dick sein sollen.

Je dicker die Folien sind desto leichter lässt sich ein hoher Weißgrad der Deckschichten erreichen (das Durchscheinen der schwarzen Basisschicht wird verhindert) und desto leichter erreicht man auch eine hohe optische Dichte (Lambert-Beersches-Gesetz). Wie Folien mit hohem Weißgrad und hoher optischer Dichte mit einer Gesamtdicke deutlich kleiner 100 μm herzustellen sind, ist den beiden Schriften nicht zu entnehmen. Angaben zum Erreichen einer geeigneten UV-Stabilität und optional zum Erreichen eines geeigneten Flammschutzes sind ebenfalls nicht vorhanden.

Ziel der vorliegenden Erfindung war es, eine maximal 60 μm dicke biaxial orientierte Polyesterfolie bereitzustellen, die eine optische Dichte OD von > 3,5 aufweist und zudem auf mindestens einer Außenseite einen Weißgrad von mindestens 80 und auf der anderen Seite einen Weißgrad von mindestens 65 aufweist, die sich für den Einsatz als/in Schattenmatten für Gewächshäuser eignet und sich auf herkömmlichen Polyesterfolienanlagen wirtschaftlich herstellen lässt.

Gelöst wird diese Aufgabe durch eine dreischichtige Polyesterfolie mit einer rußgefüllten Basisschicht und zwei $TiO_2$-haltigen Deckschichten, wobei

1. die Deckschichten 4 bis 15 μm dick sind,
2. die Schichtdicke der Basisschicht ≥ der Summe der Deckschichtdicken ist,
3. die Deckschichten mindestens 15 Gew.-% $TiO_2$ enthalten,
4. die Basisschicht mindestens 4 Gew.-% $TiO_2$ enthält,
5. die Basisschicht 1 bis 8 Gew.-% Ruß enthält und
6. der SV-Wert der Folie mindestens 600 beträgt.

Die Gesamtfoliendicke beträgt mindestens 20 bis 60 μm. Bevorzugt liegt die Foliendicke bei 25 bis 45 μm und idealerweise bei 30 bis 40 μm. Bei Foliendicken unterhalb von 20 μm lässt sich entweder kein ausreichender Weißgrad der Folie einstellen oder/und die optische Dichte der Folie ist zu gering. Je größer die Gesamtfoliendicke desto einfacher lassen sich diese beiden Parameter einstellen. Bei Foliendicken oberhalb von 60 μm wird die Folie zu unflexibel für den Einsatz in Schattenmatten und zudem wird die Verwendung unwirtschaftlich. Je geringer die Foliendicke desto günstiger wird das Verhalten in Schattenmatten und Rollos und desto wirtschaftlicher wird ihr Einsatz.

Die Dicke der Basisschicht ist mindestens genauso groß wie die Summe der Deckschichtdicken. Bevorzugt

liegt die Dicke der Basisschicht bei mindestens 55 % der Gesamtfoliendicke und idealerweise bei mindestens 63 % der Gesamtfoliendicke. Ist die Dicke der Basisschicht geringer als 50 % der Gesamtfoliendicke, wird der Ausstoß des Basisextruders zu gering zum maximalen Ausstoß der Deckschichtextruder, der an üblichen Polyesterfolien-Coextrusionsanlagen der limitierende Faktor für den Gesamtausstoß ist. Bei zu geringem Durchsatz des Basisextruders kommt es zu Druckschwankungen, die einen negativen Einfluss auf die Produktionssicherheit haben und zudem zu Farbschwankungen der Folie führen können. Außerdem wird der Gesamtdurchsatz zu gering und die Wirtschaftlichkeit sinkt. Ein weiterer wichtiger Faktor ist, dass das bei der Polyesterfolienherstellung anfallende Regenerat (z. B. der Saumstreifenanteil) nur in die Basisschicht zurückgeführt werden kann. Da die anfallende Regeneratmenge in der Regel zwischen 30 und 50 % des Gesamtdurchsatzes liegt, kann bei weniger als 50 % Basisschichtdickenanteil das Regenerat nicht mehr in seiner Gänze zurückgeführt werden und die Folienherstellung wird unwirtschaftlich.

Die Dicke der Deckschichten beträgt 4 bis 15 $\mu$m, bevorzugt 5 bis 10 $\mu$m und idealerweise 5,5 bis 8 $\mu$m. Je dicker die Deckschichten sind desto höher sind die erreichbaren Weißgrade. Je dicker die Deckschichten sind desto geringer wird die Wirtschaftlichkeit der Folienherstellung (siehe vorheriger Absatz), und überraschenderweise wird die Produktionssicherheit in der Folienherstellung umso geringer desto dicker die Deckschichten sind.

Das Titandioxid liegt dabei bevorzugt zu mindesten 80 % und idealerweise zu mindestens 99 % in der Rutilmodifikation vor. Die Rutilmodifikation führt zu einem höheren Weißgrad als die Anatasmodifikation und zu einer verbesserten UV-Stabilität der Folie.

Die Folie enthält in allen Schichten Titandioxid als Weißpigment. Die weißen Deckschichten enthalten 15 bis 35 Gew.-% $TiO_2$ bevorzugt 20 bis 27 Gew.-% $TiO_2$ (alle Angaben bezogen auf das Gewicht der Schicht). Wird weniger als 15 Gew.-% $TiO_2$ verwendet, so lassen sich keine ausreichend hohen Weißgrade erzielen, und wird mehr als 35 Gew.-% $TiO_2$ verwendet, so wird die Produktionssicherheit so schlecht, dass sich keine ausreichende Wirtschaftlichkeit erzielen lässt. Die Deckschichten können weitere Weißpigmente wie $BaSO_4$ oder Zinkoxid etc. enthalten. Die Deckschichten enthalten aber bevorzugt weniger als 6 Gew.-%, besser weniger als 2 Gew.-% und idealerweise weniger als 0,05 Gew.-% andere Weißpigmente. Alle anderen Weißpigmente außer $TiO_2$ führen zu einem geringeren UV-Schutz und zu einem geringeren Weißgrad der Deckschichten als bei Verwendung der gleichen Menge an $TiO_2$ und führen genauso wie $TiO_2$ mit steigender Konzentration zu einer Verschlechterung der Produktionssicherheit. Die Gesamtkonzentration aller Weißpigmente in den Deckschichten ist nicht größer als 35 Gew.-% und bevorzugt nicht größer als 27 Gew.-%.

Die Basisschicht enthält mindestens 4 Gew.-% Titandioxid. Bevorzugt enthält die Basisschicht mindestens 5 Gew.-% $TiO_2$ und idealerweise mindestens 6 Gew.-% $TiO_2$. Die Basisschicht enthält maximal 16 Gew.-% Weißpigment (Summe aus Gew.-% $TiO_2$, $BaSO_4$, ZnO etc.), bevorzugt weniger als 12 Gew. % und idealerweise weniger als 10 Gew.-% Weißpigment.

Enthält die Schicht weniger als 4 Gew.-% Titandioxid, so können keine ausreichend hohen Weißgrade und optischen Dichten erzielt werden. Enthält die. Folie mehr als 10 Gew.-% Weißpigment in der Basis, so hat dies keinen nennenswerten weiteren positiven Einfluss auf den Weißgrad und die optische Dichte. Mit zunehmender Konzentration an Weißpigment wird jedoch die Produktionssicherheit immer schlechter. Hinzu kommt, dass insbesondere Weißpigmente wie Bariumsulfat mit steigender Konzentration das Brandverhalten negativ beeinflussen (die Folie brennt schneller ab und verlischt nicht mehr so leicht), was insbesondere in bevorzugten Ausführungsformen für Gewächshausanwendungen unerwünscht ist.

Der $d_{50}$-Wert der eingesetzten Weißpigmente liegt zweckmäßigerweise unterhalb von 7 $\mu$m, bevorzugt unterhalb von 3 $\mu$m und idealerweise unterhalb von 1,5 $\mu$m.

Neben den Weißpigmenten können weitere Pigmente wie $SiO_2$, $Al_2O_3$ etc. eingesetzt werden, wobei jedoch in einer bevorzugten Ausführung auf den Einsatz weiterer Partikel verzichtet wird, da diese - ähnlich wie die Weißpigmente - den Gesamtpigment-/-partikelgehalt erhöhen und so einen negativen Einfluss auf die Produktionssicherheit haben.

Die weißen Deckschichten enthalten in einer bevorzugten Ausführungsform zwischen 500 und 2000 ppm optischen Aufheller zur Erhöhung des Weißgrades. Geeignete optische Aufheller sind z. B. Thiophenyl-bis-benzoxazolderivate wie beispielsweise Uvitex®OB oder Stilben--bis-benzoxazolderivaten wie Hostalux® KS.

Die Deckschichten enthalten in einer bevorzugten Ausführungsform zudem mindestens einen UV-Stabilisator. Bevorzugte UV-Stabilisatoren sind dabei Triazinderivate wie Tinuvin® 1577 (BASF, CH). UV-Stabilisatoren werden der/den Deckschicht/en in einer bevorzugten Ausführungsform in Mengen zwischen 0,2 und 1 Gew.-%, bezogen auf das Gewicht der Schicht, zugegeben. Besonders bevorzugt ist ein UV-Stabilisatorgehalt zwischen 0,2 und 0,4 Gew.-%.

Die Basisschicht enthält 1 bis 8 Gew.-% Ruß als Schwarzpigment (bezogen auf das Gewicht der Schicht). Idealerweise liegt der Rußgehalt zwischen 1,2 und 4,5 Gew.-% Ruß. Höhere Rußgehalte führen zu einem geringeren Weißgrad der Deckschichten, und niedrigere Rußgehalte führen zu einer zu geringen optischen Dichte der Folie. Bevorzugt wird nach den "Furnace"-Prozess hergestellter Ruß verwendet. Der $d_{50}$-Wert des eingesetzten Rußes ist kleiner als 2 $\mu$m. In einer bevorzugten Ausführungsform liegt der Gehalt an PAK = Polycyclische Aromatische Kohlenwasserstoffe (Naphthalen, Acenaphthylen, Fluoren, Phenanthren, Anthracen, Fluoranthen, Pyren, Benzo(ghi)fluoranthen, Benz (a)anthracen, Cyclopenta(cd)pyren, Chrysen, Benzo(b/j)fluoranthen, Benzo(k/j)fluoranthen, Benzo(e)pyren, Benzo(a)pyren, Perylen, Dibenz(ac/ah)anthracen, Benzo(ghi)perylen, Anthantren, Coronen) in Summe unterhalb von 1,5 ppm und bevorzugt unterhalb von 1 ppm und besonders bevorzugt unterhalb von 0,5 ppm (die PAK werden durch eine 48-stündige, in der Siedehitze durchgeführte Toluolextraktion von der Carbon Black-Oberfläche (Ruß) abgelöst, dann mittels Gaschromatographie, gekoppelt mit einem Masenspektrometer (GC/MS) identifiziert und quantifiziert). So kann verhindert werden, dass PAK in nennenswerten Mengen aus der Folie herausmigrieren und Nutzer gefährden. Zudem wird so die Belastung der Mitarbeiter während der Folienherstellung auch ohne teure Schutzmaßnahmen verhindert.

Das Polymer der Basisschicht B und der übrigen Schichten der Folie (ohne Berücksichtigung von UV-Stabilisatoren, Pigmenten, Flammschutzmittel, optischen Aufhellern und sonstiger Additive) besteht bevorzugt zu mindestens 80 Gew.-% aus einem Polyester. Dafür geeignet sind unter anderem Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN) sowie aus beliebigen Mischungen der genannten Carbonsäuren und Diole. Besonders bevorzugt sind Polyester, die zu mindestens 90 Mol-%, bevorzugt mindestens 95 Mol-% und idealerweise zu mindestens 97 Mol-% aus Ethylenglykol- und Terephthalsäure-Einheiten bestehen. Der Einsatz von Naphthalin-2,6-dicarbonsäure hat gegenüber dem Einsatz von Terephthalsäure keine Vorteile, so dass bedingt durch den höheren Preis von Naphthalin-2,6-dicarbonsäure üblicherweise auf diese verzichtet wird.

Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel $HO-(CH_2)_n-OH$, wobei n bevorzugt kleiner 10 ist, Cyclohexandimethanol, Butandiol, Propandiol etc.. Geeignete andere Dicarbonsäuren sind z. B. Isophthalsäure, Adipinsäure etc.. Es hat sich als günstig für die Produktionssicherheit und die Bewitterungsstabilität in Gewächshausanwendungen erwiesen, wenn die Folie weniger als 2 Gew.-%, bevorzugt weniger als 1,5 Gew.-% Diethylenglykol enthält. Es hat sich aus den gleichen Gründen als günstig erwiesen, wenn die Folie weniger als 12 Gew.-%, bevorzugt weniger als 8 Gew.-% und idealerweise weniger als 1 Gew.-°% Isophthalsäure enthält. Es hat sich weiterhin als günstig erwiesen, wenn die Folie weniger als 3 Gew.-%, idealerweise weniger als 1 Gew.-% CHDM (1,4-Cyclohexandimethanol) enthält. Es hat sich weiterhin als günstig erwiesen, wenn der Gesamtgehalt an Isophthalsäure, Diethylenglykol und CHDM nicht größer ist als 3,5 Gew.-% und idealerweise kleiner ist als 2 Gew.-%.

In einer besonderen Ausführungsform für Gewächshausanwendungen, wie Schattenmatten, weist die eine reduzierte Entflammbarkeit auf.

Die Folie enthält dazu 0,5 bis 10 Gew.-% eines Flammschutzmittels. Bevorzugt werden Flammschutzmittel auf Basis von Phosphororganischen Verbindungen, bevorzugt Estern der Phosphorsäure oder Phosphorigen Säure, eingesetzt. Es hat sich dabei als günstig erwiesen, wenn die phosphorhaltige Verbindung Teil des Polyesters ist. Nicht einpolymerisierte phosphorhaltige Flammschutzmittel wie z. B. Adeka®-Stab 700 (4,4'-(Isopropylidndiphenyl)bis-(diphenylphosphat)) haben neben dem Nachteil einer Ausgasung des Flammschutzmittels während der Produktion zudem einen sehr starken nachteiligen Einfluss auf die Hydrolysestabilität der Folie, so dass im feuchtwarmen Gewächshausklima eine schnelle Versprödung der Folie einsetzt und die Schattenmatten ausgetauscht werden müssen. Diese Effekte werden durch die Verwendung von in die Polyesterkette eingebauten Phophorverbindungen deutlich reduziert. Der Phosphor kann dabei Teil der Hauptkette sein wie z. B. bei Verwendung von 2-Carboxyethyl-methylphosphinsäure (andere geeignete Verbindungen sind z. B. in DE-A-23 46 787 beschrieben). Besonders bevorzugt sind jedoch Phosphorverbindungen, bei denen sich der Phosphor in einer Seitenkette befindet, da hierdurch die Hydrolyseneigung unter Gewächshausbedingungen am geringsten ist. Solche Verbindungen sind bevorzugt Verbindungen der Formel (I):

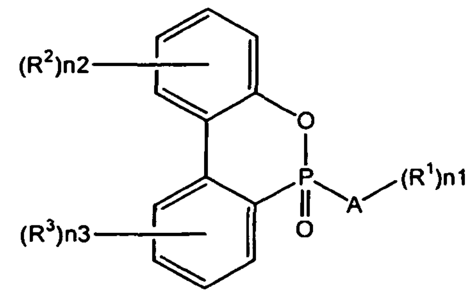

(I)

worin

$R^1$ eine esterbildende Gruppe, ausgewählt aus $-COOR^4$, $-OR^5$ und $-OCOR^6$, ist;

$R^2$ und $R^3$ unabhängig ausgewählt werden aus Halogenatomen, Kohlenwasserstoffgruppen mit 1-10 Kohlenstoffatomen und $R^1$;

$R^4$ ein Wasserstoffatom, eine Carbonylgruppe oder eine Kohlenwasserstoffgruppe mit 1-10 Kohlenstoffatomen ist, die eine Hydroxylgruppe oder Carboxylgruppe enthalten kann;

$R^5$ ein Wasserstoffatom oder eine Kohlenwasserstoffgruppe mit 1-10 Kohlenstoffatomen ist, die eine Hydroxylgruppe oder Carboxylgruppe enthalten kann;

$R^6$ eine Kohlenwasserstoffgruppe mit 1-10 Kohlenstoffatomen ist, die eine Hydroxylgruppe oder Carboxylgruppe enthalten kann;

A eine zwei- oder dreiwertige Kohlenwasserstoffgruppe mit 1-8 Kohlenstoffatomen ist;

n1 1 oder 2 ist; und

n2 und n3 jeweils 0, 1, 2, 3 oder 4 sind,

bevorzugt solche, die zwei esterbildende funktionale Gruppen enthalten.

Ganz besonders geeignet ist (6-Oxo-dibenzo-[c,e]-[1,2]-oxaphosphorin-6-ylmethyl)-bernsteinsäure-bis(2-hydroxyethyl)-ester (CAS-Nr. 63562-34-5). Bei Verwendung dieses Monomers in der Polyesterherstellung ergeben sich Polymere mit einer verhältnismäßig niedrigen Hydrolyseneigung, welches sich in der Folienherstellung bei guter Produktionssicherheit verarbeiten lässt.

Die Menge an Stabilisator wird so eingestellt, dass der Anteil an Phosphor in der Folie bei 1500 bis 5000 ppm, bevorzugt bei 1800 bis 4000 ppm und idealerweise bei 2000 bis 3000 ppm liegt (ppm bezogen auf Gewichte, nicht auf Mol). Liegt der der Phosphoranteil unterhalb von 1500 ppm, so brennt die Folie zu schnell ab und verlischt nicht von selbst. Je höher der Anteil an Phosphor wird desto geringer wird die Abbrandgeschwindigkeit, aber umso geringer wird auch die Hydrolysestabilität. Oberhalb von 5000 ppm kann die Folie maximal eine Pflanzperiode lang eingesetzt werden. Unterhalb von 3000 ppm ist die Hydrolysegeschwindigkeit gering genug, so dass innerhalb mehrerer Einsatzjahre nicht mit einer Zersetzung durch Hydrolyse zu rechnen ist.

Der Phosphorgehalt kann sich dabei gleichmäßig auf die Schichten verteilen oder unterschiedlich sein. Es hat sich als günstig erwiesen, wenn die Außenlagen mindestens 75 % der Phosphorkonzentration der Mittelschicht enthalten, bevorzugt enthalten sie die gleiche Phosphorkonzentration, und idealerweise enthalten die Außenschichten mindestens 5 % mehr Phosphor als die Mittelschicht. Dies führt zu einem besonders günstigen Brandverhalten, und es wird eine insgesamt geringere Phosphormenge benötigt.

In einer bevorzugten Ausführungsform ist die Folie mindestens einseitig mit einer Haftvermittlung für Druckfarben beschichtet. Als Beschichtungen eignen sich beispielsweise Acrylate oder Copolyester mit Sulfoisophthalsäure-Gehalten von > 0,2 Gew.-% (bezogen auf die Beschichtungszusammensetzung).

In einer bevorzugten Ausführungsform weist die erfindungsgemäße Folie bei 150 °C einen Schrumpf in Längs- und Querrichtung von unter 3 %, bevorzugt unter 2 % und besonders bevorzugt von unter 1,5 % auf. Diese Folie weist weiterhin bei 100 °C eine Ausdehnung von weniger als 3 %, bevorzugt von weniger als 1 % und besonders bevorzugt von weniger als 0,3 % auf. Diese Formstabilität kann beispielsweise durch geeignete Relaxation der Folie vor dem Aufwickeln erhalten werden wie sie weiter unten beschrieben ist (s. Verfahrensbeschreibung). Diese Formstabilität ist zweckmäßig, um bei der Verwendung in Schattenmatten ein Nachschrumpfen der Streifen zu vermeiden, welches zum Durchscheinen von Licht zwischen den Streifen führen würde. Sowohl bei der Herstellung von Rollos als auch bei Schattenmatten können sowohl ein zu hoher Schrumpf als auch eine zu hohe Ausdehnung zu wellenartigen Verdehnungen der fertigen Produkte führen.

In einer bevorzugten Ausführungsform weist die Folie zudem einen E-Modul in beiden Folienrichtungen (MD und TD) von größer 3000 $N/mm^2$ und bevorzugt von größer 3500 $N/mm^2$ und besonders bevorzugt > 4500 $N/mm^2$ in Längs- und Querrichtung (MD und TD) auf. Die F5-Werte (Kraft bei 5 % Dehnung) liegen bevorzugt in Längs- und Querrichtung bei über 80 $N/mm^2$ und besonders bevorzugt bei über 90 $N/mm^2$. Diese mechanischen Eigenschaften können beispielsweise durch geeignete biaxiale Streckung der Folie erhalten werden wie sie weiter unten beschrieben ist (s. Verfahrensbeschreibung).

Die genannten mechanischen Eigenschaften führen dazu, dass sich die Folie in den Endanwendungen unter Zug nicht übermäßig verdehnt und gut führbar bleibt.

Die Folie weist einen SV-Wert von 600 bis 950, bevorzugt von 650 bis 850 und idealerweise von 700 bis 850 auf. Liegt der SV-Wert unterhalb von 600, so wird die Folie schon bei der Herstellung so brüchig, dass es zu häufigen Abrissen kommt, zudem kommt es in den Endanwendungen zu einem schnelleren weiteren Viskositätsverlust unter

Verlust der Flexibilität der Folien mit Bruchfolge, zudem werden die genannten mechanischen Festigkeiten bei geringerem SV-Wert nicht mehr sicher erreicht. Wenn die Folie einen höheren SV-Wert als 950 aufweist, dann wird das Polymer aufgrund der hohen Pigmentbeladung im Extruder so zäh, dass übermäßig hohe elektrische Ströme im Extrudermotor auftreten und es zu Druckschwankungen in der Extrusion kommt. Dies führt zu einer schlechten Produktionssicherheit. Außerdem wird der Abrieb an den Extrusionswerkzeugen und an Schneidwerkzeugen unverhältnismäßig hoch.

Die Folie weist mindestens einseitig, bevorzugt beidseitig, einen Weißgrad nach Berger von mindestens 80 auf. Keine Seite der Folie hat einen Weißgrad von weniger als 65. Bevorzugt liegt mindestens eine Seite bei einem Weißgrad von größer 88 und besonders bevorzugt mindestens eine Seite bei einem Weißgrad von größer 100. Der Weißgrad ergibt sich, wenn $TiO_2$ in den angegebenen Mengen in einer Außenschicht und der Basisschicht der erfindungsgemäßen Dicke enthalten ist und gegebenenfalls ein optischer Aufheller verwendet wird (insbesondere bei einem Weißgrad von > 100).

Die optische Dichte der Folie beträgt mindestens 3,5, bevorzugt mindestens 4,5, besonders bevorzugt mindestens 5 und idealerweise mindestens 5,15. Die Transparenz der Folie liegt unterhalb von 0,035 %.

In einer bevorzugten Ausführungsform liegt die Reflektion der Folie mindestens einseitig bei 550 nm bei größer oder gleich 70 %, bevorzugt bei größer oder gleich 80 % und idealerweise bei größer oder gleich 85 %. Die Reflektion bei 370 nm liegt mindestens einseitig bei kleiner 60 %, bevorzugt bei kleiner oder gleich 50 % und idealerweise bei kleiner oder gleich 45 %. Je größer die Reflektion bei 550 nm desto größer ist die Wachstumsrate von Pflanzen in Gewächshäusern, in denen Schattenmatten aus der erfindungsgemäßen Folie zum Einsatz kommen. Je kleiner die Reflektion bei 370 nm desto weniger UV-Licht kann Gegenstände im Strahlengang vor der Folie schädigen. Die genannten Reflektions-Charakteristika werden durch den Einsatz von $TiO_2$ in den angegebenen Mengen in allen Schichten erreicht.

<u>Verfahren</u>

Die Polyester-Matrixpolymere der einzelnen Schichten werden durch Polykondensation hergestellt, entweder ausgehend von Dicarbonsäuren und einem Diol (sog. "PTA-Verfahren") oder auch ausgehend von den Estern der Dicarbonsäuren, vorzugweise den Dimethylestern, und einem Diol (sog. "DMT-Verfahren").

Für die Herstellung der erfindungsgemäßen Folien verwendbare Polyethylenterephthalate haben bevorzugt SV-Werte im Bereich von 500 bis 1300, wobei die einzelnen Werte weniger wichtig sind, entscheidend ist der mittlere SV-Wert der eingesetzten Rohstoffe, der größer als 700 sein sollte und bevorzugt größer als 750 ist.

Die Weißpigmente, anorganischen Partikel oder Ruß sowie UV-Stabilisatoren können bereits bei der Herstellung des Polyesters zugegeben werden. Hierzu werden die Partikel in Ethylenglykol dispergiert, gegebenenfalls gemahlen, dekantiert usw. und dem Reaktor, entweder im (Um)-Esterungs- oder Polykondensationsschritt zugegeben. Bevorzugt kann alternativ ein konzentriertes partikelhaltiges oder additivhaltiges Polyester-Masterbatch mit einem Zweischneckenextruder hergestellt werden und bei der Folienextrusion mit partikelfreiem Polyester verdünnt werden. Es hat sich dabei als günstig erwiesen, wenn keine Masterbatche eingesetzt werden, die weniger als 30 Gew.-% Polyester enthalten. Im Falle von Rußmasterbatchen sollten mindestens 50 Gew.-% Polyester enthalten sein. Der Partikel/Ruß-Gehalt sollte aber bei mindestens 20 Gew.-%, bevorzugt bei mindestens 30 Gew.-% liegen. Werden Masterbatche mit höherem Additivgehalt eingesetzt, kommt es zur unerwünschten Bildung von Stäuben, und die Verteilung der Additive in der Folie wird deutlich schlechter. Sind die Additivgehalte zu niedrig, werden die erfindungsgemäßen SV-Werte in den Folien schwerer erreicht, da mehr Polymer mit sehr hohem SV-Wert zugesetzt werden muss, um den niedrigen SV-Wert der Partikelmasterbatche auszugleichen.

Eine weitere Möglichkeit besteht darin, Partikel und Additive direkt bei der Folienextrusion in einem Zweischneckenextruder zuzugeben.

Wenn Einschneckenextruder verwendet werden, dann hat es sich als vorteilhaft erwiesen, die Polyester vorher zu trocknen. Bei Verwendung eines Zweischneckenextruders mit Entgasungszone kann auf den Trocknungsschritt verzichtet werden.

Zunächst wird das Polymere bzw. die Polymermischung der einzelnen Schichten in Extrudern komprimiert und verflüssigt. Dann werden die Schmelzen in einer Mehrschichtdüse zu flachen Schmelzefilmen ausgeformt, durch eine Breitschlitzdüse gepresst und auf einer Kühlwalze und einer oder mehreren Abzugswalzen abgezogen, wobei die geformte Folie abkühlt und sich verfestigt.

Die erfindungsgemäße Folie wird biaxial orientiert, d. h. biaxial gestreckt. Die biaxiale Verstreckung der Folie wird am häufigsten sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen.

Statt der sequenziellen Streckung ist auch eine simultane Streckung der Folie möglich, aber nicht notwendig.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 130 °C (Aufheiztemperaturen 80 bis 130 °C) und in Querrichtung in einem Temperaturbereich von 90 °C (Beginn der Streckung) bis 140 °C (Ende der Streckung) durchgeführt. Das Längsstreckverhältnis liegt im Bereich von 2,5:1 bis 5,5:1, bevorzugt von 3:1 bis 5,0:1. Das Querstreckverhältnis liegt allgemein im Bereich von 2,5:1 bis 5,0:1, bevorzugt von 3:1 bis 4,5:1.

Zum Erreichen der gewünschten Folieneigenschaften hat es sich als vorteilhaft erwiesen, wenn die Strecktemperatur (in MD und TD) unter 125 °C und bevorzugt unter 118 °C liegt.

Vor der Querstreckung können eine oder beide Oberfläche(n) der Folie nach den an sich bekannten Verfahren in-line beschichtet werden. Die In-line-Beschichtung kann beispielsweise zu einer verbesserten Haftung zwischen einer Metallschicht oder einer Druckfarbe und der Folie, zu einer Verbesserung des antistatischen Verhaltens oder des Verarbeitungsverhaltens der Folie führen. Wenn die äußeren coextrudierten Schichten keine anorganischen Partikel zur Verbesserung der Schlupf- und Wickelcharakteristik enthalten, so kann an dieser Stelle eine partikelhaltige Beschichtung aufgebracht werden.

Bei der nachfolgenden Thermofixierung wird die Folie über eine Zeitdauer von etwa 0,1 bis 10 s unter Spannung bei einer Temperatur von 150 bis 250 °C gehalten und zum Erreichen der bevorzugten Schrumpf- und Längungswerte um mindestens 1 %, bevorzugt mindestens 3 % und besonders bevorzugt mindestens 4 % in Querrichtung relaxiert. Diese Relaxation findet bevorzugt in einem Temperaturbereich von 150 bis 190 °C statt. Bevorzugt finden weniger als 25 % aber mehr als 5 % der Gesamtrelaxation innerhalb der ersten 25 % der Relaxationszeit statt. Anschließend wird die Folie in üblicher Weise aufgewickelt.

Bei der Herstellung der Folie ist gewährgeleistet, dass das Regenerat in einer Konzentration von 20 bis 60 Gew.-%, bezogen auf das Gesamtgewicht der Folie, wieder der Extrusion zugeführt werden kann, ohne dass dabei die physikalischen und optischen Eigenschaften der Folie nennenswert negativ beeinflusst werden.

Zur Charakterisierung der Rohstoffe und der Folien wurden die folgenden Messwerte benutzt:

### Messung des mittleren Partikel-Durchmessers $d_{50}$

Die Bestimmung des mittleren Durchmessers $d_{50}$ wird mittels Laser auf einem Horiba LA 500 mittels Laserdiffraktion durchgeführt (andere Messgeräte sind z. B. Malvern Master Sizer oder Sympathec Helos, welche das gleiche Messprinzip verwenden). Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Die Partikelgrößenverteilung ist durch zwei Parameter gekennzeichnet, den Medianwert $d_{50}$ (= Lagemaß für den Mittelwert) und das Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50%-Ordinatenwertes mit der Summenkurve liefert auf der Abszissenachse den gewünschten $d_{50}$-Wert.

### Primärkorngröße von Nanoteilchen (z.B. Aerosil® und Nyacol®)

Die Bestimmung der mittleren Größe der Primärteilchen erfolgt an transmissions-elektronenmikroskopischen (TEM) Aufnahmen des zu untersuchenden Produktes. Wenn die Probe als Folie oder Kunststoffgranulat vorliegt, so ist die TEM-Untersuchung an Mikrotomschnitten durchzuführen.

### Transparenz

Die Transparenz wird nach ASTM-D 1033-77 gemessen mittels haze-gard® plus der Firma BYK-Gardner GmbH, DE.

### SV-Wert (standard viscosity)

Die Standardviskosität SV (DCE) wird, angelehnt an DIN 53 726, bei einer Konzentration von 1 % in Dichloressigsäure in einem Ubbelohde Viskosimeter bei 25 °C gemessen. Aus der bestimmten relativen Viskosität ($\eta_{rel}$) wird der dimensionslose SV-Wert wie folgt ermittelt:

$$SV = (\eta_{rel} - 1) \cdot 1000$$

Folie bzw. Polymerrohstoffe werden dazu in DCE gelöst, und die Weißpigmente werden vor der Messung abzentrifugiert. Der Anteil an Pigmenten wird mittels Aschebestimmung ermittelt und durch entsprechende Mehreinwaage korrigiert. D. h.

$$\text{Einwaage} = (\text{Einwaagemenge laut Vorschrift}) / ((100\text{-Partikelgehalt in }\%)/100)$$

**Mechanische Eigenschaften**

Die mechanischen Eigenschaften werden über Zugprüfung angelehnt an DIN EN ISO 572-1 und -3 an 100 mm . 15 mm großen Folienstreifen bestimmt.

**Schrumpf**

Der thermische Schrumpf wird an quadratischen Folienmustern mit einer Kantenlänge von 10 cm bestimmt. Die Proben werden so ausgeschnitten, dass eine Kante parallel zur Maschinenrichtung und eine Kante senkrecht zur Maschinenrichtung verläuft. Die Proben werden genau ausgemessen (die Kantenlänge $L_0$ wird für jede Maschinenrichtung TD und MD bestimmt, $L_0$ TD und $L_{0\ MD}$) und werden 15 min bei der angegeben Schrumpfungstemperatur (hier 150 °C) in einem Umlufttrockenschrank getempert. Die Proben werden entnommen und bei Raumtemperatur genau ausgemessen (Kantenlänge $L_{TD}$ und $L_{MD}$). Der Schrumpf ergibt sich aus der Gleichung

$$\text{Schrumpf [\%] MD} = 100 \bullet (L_{0\ MD} - L_{MD}) / L_{0\ MD}$$

$$\text{Schrumpf [\%] TD} = 100 \bullet (L_{0\ TD} - L_{TD}) / L_{0\ TD}$$

**Ausdehnung**

Die thermische Ausdehnung wird an quadratischen Folienmustern mit einer Kantenlänge von 10 cm bestimmt. Die Proben werden genau ausgemessen (Kantenlänge $L_0$), 15 min bei 100 °C in einem Umlufttrockenschrank getempert und anschließend bei Raumtemperatur genau ausgemessen (Kantenlänge L). Die Ausdehnung ergibt sich aus der Gleichung

$$\text{Ausdehnung [\%]} = 100 \cdot (L - L_0) / L_0$$

und wird in jeder Folienrichtung separat ermittelt.

**UV-Stabilität**

Die UV-Stabilität wird wie in DE 697 31 750 (DE von WO 98/06575) auf Seite 8 beschrieben bestimmt und der UTS-Wert in % vom Ausgangswert angegeben.

**Optische Dichte (Transmission)**

Die Messung der optischen Dichte erfolgt mit einem PM Densitometer Heiland Electronic, Wetzlar, DE.
Densitometer TD-SO6
Serial-No.: 0909011621

**Flammfestigkeit:**

Ein 30 . 30 cm großes Folienstück wird mit zwei Klammern an zwei benachbarten Ecken gefasst und senkrecht aufgehängt. Es ist darauf zu achten, dass am Ort der Aufhängung keine Luftbewegung herrscht, die das Folienstück

merklich bewegt. Eine leichte Abluft von oben ist dabei akzeptabel.

Das Folienstück wird anschließend in der Mitte der unteren Seite mit einer Flamme von unten beflammt. Zur Beflammung kann ein handelsübliches Feuerzeug oder besser ein Bunsenbrenner genutzt werden. Die Flamme ist dabei länger als 1 cm und kürzer als 3 cm. Die Flamme wird so lange an die Folie gehalten bis diese ohne Zündflamme weiterbrennt (mindestens 3 s). Die Flamme wird maximal für 5 s an die Folie gehalten und der abbrennenden/wegschrumpfenden Folie nachgeführt. Dies wird so lange wiederholt bis die Folie einmal mehr als 3 s ohne Zündflamme weiterbrennt. Es werden maximal 4 Zündvorgänge durchgeführt.

Die Flammfestigkeit wird mit Noten bewertet:

1 = Die Folie hat sich bei 4 Zündvorgängen keinmal länger als 3 Sekunden entzündet.

2 = Die Folie hat sich entzündet und ist nach weniger als 15 s selbst verloschen, und es ist noch mehr als 30 % der Folienfläche vorhanden.

3 = Die Folie hat sich entzündet und ist nach weniger als 20 s selbst verloschen, und es ist noch mehr als 30 % der Folienfläche vorhanden.

4 = Die Folie hat sich entzündet und ist nach weniger als 40 s selbst verloschen, und es ist noch mehr als 30 % der Folienfläche vorhanden.

5 = Die Folie hat sich entzündet und ist nach weniger als 40 s selbst verloschen, und es ist noch mehr als 10 % der Folienfläche vorhanden.

6 = Die Folie hat sich entzündet und hat mehr als 40 s gebrannt, oder es sind nach dem Selbstverlöschen weniger als 10 % der Folienfläche vorhanden.

**Weißgrad**

Der Weißgrad wird nach Berger bestimmt.

Die Untersuchung wird mit einem Farbmessgerät "color sphere" (Spektralphotometer; Fa. BYK Gardner, DE) durchgeführt, an das ein Rechner angeschlossen ist, der die Auswertung der Messwerte übernimmt. Das Farbmesssystem besteht aus einem Spektralphotometer mit Ulbricht-Kugel und einer d/8°-Messgeometrie (Doppelstrahl). Die Probe wird vom Messstrahl in Abständen von 20 nm mit einer Silizium-Fotozelle / Interferenzfilter abgetastet (Messbereich 400 bis 700 nm). Der angeschlossene Rechner ruft das Programm Auto QC zur Messung auf und steuert den Ablauf der Messung (Software von Fa. BYK Gardner mitgeliefert).

Die Messung erfolgt an einer Folienlage, wobei über die zu messende Folie eine Lichtfalle (Schwarzer Tubus als Zubehör zum Farbmessgerät "color sphere" von Fa. BYK Gardner erhältlich) gelegt wird.

**Reflektion**

Die Reflektion wird mit einem Lambda 12 UV-Vis Spektrometer der Firma Perkin Elmer, USA, bestimmt.

**Beispiele**

**Beispiel 1 (erfindungsgemäß)**

Es wurden 3 Polymer-Mischungen in 3 Zweischneckenextrudern bei 290 °C aufgeschmolzen:

**Deckschicht A (Dicke in der Endfolie 7μm)**

44 Gew.-% R1 = Polyethylenterephthalatrohstoff mit einem SV-Wert von 700 und 50 Gew.-% $TiO_2$ (Typ R-104 von DuPont, USA, in der Rutilmodifikation). Das $TiO_2$ wurde in einem Zweischneckenextruder in das Polyethylenterephthalat eingearbeitet.

16 Gew.-% R2 = Polyethylenterephthalatrohstoff mit einem SV-Wert von 730, der (6-Oxo-dibenzo-[c, e]-[1,2]-oxaphosphorin-6-ylmethyl)-bernsteinsäure-bis(2-hydroxyethyl)ester als Comonomer enthält, wobei der Anteil an Phosphor aus diesem 18000 ppm im Rohstoff beträgt.

10 Gew.-% R3 = Polyethylenterephthalatrohstoff mit einem SV-Wert von 730, der 1 Gew.-% Uvitex®OB (Ciba/BASF, CH) als optischen Aufheller enthält. Das Uvitex®OB wurde in einem Zweischneckenextruder in das Polyethylenterephthalat eingearbeitet.

(fortgesetzt)

| | |
|---|---|
| 30 Gew.-% R4 = | Polyethylenterephthalatrohstoff mit einem SV-Wert von 1100 |

**Deckschicht C (Dicke in der Endfolie 7 µm)**

| | |
|---|---|
| 44 Gew.-% R1 = | Polyethylenterephthalatrohstoff mit einem SV-Wert von 700 und 50 Gew.-% $TiO_2$ (Typ R-104 von DuPont, USA, in der Rutilmodifikation). Das $TiO_2$ wurde in einem Zweischneckenextruder in das Polyethylenterephthalat eingearbeitet. |
| 16 Gew.-% R2 = | Polyethylenterephthalatrohstoff mit einem SV-Wert von 730, der (6-Oxo-dibenzo-[c, e]-[1,2]-oxaphosphorin-6-ylmethyl)-bernsteinsäure-bis(2-hydroxyethyl)ester als Comonomer enthält, wobei der Anteil an Phosphor aus diesem 18000 ppm im Rohstoff beträgt. |
| 10 Gew.-% R3 = | Polyethylenterephthalatrohstoff mit einem SV-Wert von 730, der 1 Gew.-% Uvitex®OB (Ciba/ BASF, CH) als optischen Aufheller enthält. Das Uvitex®OB wurde in einem Zweischneckenextruder in das Polyethylenterephthalat eingearbeitet. |
| 30 Gew.-% R4 = | Polyethylenterephthalatrohstoff mit einem SV-Wert von 1100 |

**Basisschicht B (Dicke in der Endfolie 26 µm)**

| | |
|---|---|
| 14 Gew.-% R1 = | Polyethylenterephthalatrohstoff mit einem SV-Wert von 700 und 50 Gew.-% $TiO_2$ (Typ R-104 von DuPont, USA, in der Rutilmodifikation). Das $TiO_2$ wurde in einem Zweischneckenextruder in das Polyethylenterephthalat eingearbeitet. |
| 15 Gew.-% R2 = | Polyethylenterephthalatrohstoff mit einem SV-Wert von 730, der (6-Oxo-dibenzo-[c, e]-[1,2]-oxaphosphorin-6-ylmethyl)-bernsteinsäure-bis(2-hydroxyethyl)ester als Comonomer enthält, wobei der Anteil an Phosphor aus diesem 18000 ppm im Rohstoff beträgt. |
| 35 Gew.-% R4 = | Polyethylenterephthalatrohstoff mit einem SV-Wert von 1100 |
| 14 Gew.-% R5 = | Polyethylenterephthalatrohstoff mit einem SV-Wert von 730, der 30 Gew.-% Ruß vom Typ Printex® F 80 (Degussa, DE) enthält. Der Ruß (Primärteilchengröße 16 nm und BET-Oberfläche 220 $m^2/g$) wurde in einem Zweischneckenextruder in das Polyethylenterephthalat eingearbeitet. Der Ruß enthält in Summe weniger als 0,5 ppm PAK = Polycyclische Aromatische Kohlenwasserstoffe. |
| 22 Gew.-% R6 = | Polyethylenterephthalatrohstoff mit einem SV-Wert von 810 |

Die Polymermischungen wurden in einem Adapter zusammengeführt und durch eine Breitschlitzdüse auf eine auf 60 °C temperierte Kühlwalze elektrostatisch angelegt. Anschließend wurde die so erhaltene Folie bei folgenden Bedingungen längs- und dann quergestreckt:

| | | | |
|---|---|---|---|
| Längsstreckung | Aufheiztemperatur | 75-115 | °C |
| | Strecktemperatur | 115 | °C |
| | Längsstreckverhältnis | 3,5 | |
| Querstreckung | Aufheiztemperatur | 100 | °C |
| | Strecktemperatur | 110 | °C |
| | Querstreckverhältnis | 4,0 | |
| Fixierung | Temperatur | 240 - 150 | °C |
| | Dauer | 3 | s |
| | Relaxation in TD bei 200 - 150 °C | 5 | % |

Die so erhaltene Folie hatte eine Gesamtdicke von 40 µm, und die Deckschichten A und C waren beide 7 µm dick. Der Weißgrad der Folie betrug 103. Die optische Dichte betrug 5,4, das E-Modul in MD 4600 $N/mm^2$ und in TD

5561 N/mm$^2$. Der F5-Wert lag in MD bei 105 N/mm$^2$ und in TD bei 112 N/mm$^2$. Der Schrumpf in MD bei 150 °C lag bei 1,3 % und bei 0,6 % in TD. Die Ausdehnung bei 100 °C lag in beiden Folienrichtungen bei 0,1 %. Der SV-Wert der Folie betrug 764. Der Diethylenglykolanteil lag bei 0,9 Gew.-%. Der Anteil an IPA, Butandiol, Naphthalindicarbonsäure und Cyclohexandimethanol lag bei jeweils < 0,1 Gew.-%. Die Folie erreichte im Flammtest die Note 2. Die Reflektion bei 550 nm war 85 % auf beiden Seiten. Die Reflektion bei 370 nm lag beidseitig bei < 45 %. UTS bei Bewitterung = 75 %. Die Folie wurde auf einer kommerziellen Polyesterfolienanlage hergestellt (Endbreite 5 m) und riss weniger als 3 mal am Tag ab.

**Vergleichsbeispiel 1**

Identisch mit Beispiel 1, aber der Rohstoff R1 wurde in allen Schichten durch den Rohstoff R7 ersetzt. Dieser hatte die folgende Zusammensetzung:

R7 = Polyethylenterephthalatrohstoff mit einem SV-Wert von 700 und 50 Gew.-% Bariumsulfat (Typ BLANC FIXE® XR-HX, Sachtleben Chemie, DE). Das Bariumsulfat wurde in einem Zweischneckenextruder in das Polyethylenterephthalat eingearbeitet.

Die so erhaltene Folie hatte eine Gesamtdicke von 40 μm, und die Deckschichten A und C waren beide 7 μm dick. Der Weißgrad der Folie betrug 103. Die optische Dichte betrug 3,3, das E-Modul in MD 4610 N/mm$^2$ und in TD 5453 N/mm$^2$. Der F5-Wert lag in MD bei 104 N/mm$^2$ und in TD bei 110 N/mm$^2$. Der Schrumpf in MD bei 150 °C lag bei 1,3 % und bei 0,6 % in TD. Die Ausdehnung bei 100 °C lag in beiden Folienrichtungen bei 0,1 %. Der SV-Wert der Folie betrug 763. Der Diethylenglykolanteil lag bei 0,9 Gew.-%. Der Anteil an IPA, Butandiol, Naphthalindicarbonsäure und Cyclohexandimethanol lag bei jeweils < 0, 1 Gew.-%. Die Folie erreichte im Flammtest die Note 4. Die Reflektion bei 550 nm war 80 % auf beiden Seiten. Die Reflektion bei 370 nm lag beidseitig bei < 45 %. UTS bei Bewitterung = 9 %.

## Patentansprüche

1. Mindestens dreischichtige biaxial orientierte Polyesterfolie mit zwei weißen Deckschichten und einer rußgefüllten Basisschicht, wobei

   - die Deckschichten 4 bis 15 μm dick sind,
   - die Gesamtfoliendicke 20 bis 60 μm beträgt,
   - die Schichtdicke der Basisschicht ≥ der Summe der Deckschichtdicken ist,
   - die Folie in allen Schichten Titandioxid als Weißpigment enthält,
   - die weißen Deckschichten mindestens 15 und höchstens 35 Gew.-% $TiO_2$ enthalten,
   - die Basisschicht mindestens 4 Gew.-% $TiO_2$ enthält,
   - die rußhaltige Basisschicht 1 bis 8 Gew.-% Ruß enthält und
   - der SV-Wert der Folie mindestens 600 und höchstens 950 beträgt, wobei alle Gew.-%-Angaben auf das Gewicht der jeweiligen Schicht bezogen sind.

2. Polyesterfolie nach Anspruch 1, **dadurch gekennzeichnet, dass** die Gesamtfoliendicke 25 bis 45 μm beträgt.

3. Polyesterfolie nach Anspruch 1 oder 2, **dadurch gekennzeichnet, dass** die Basisschicht maximal 16 Gew.-% Weißpigment enthält.

4. Polyesterfolie nach einem der Ansprüche 1 bis 3, **dadurch gekennzeichnet, dass** die Dicke der Basisschicht mindestens 55 % der Gesamtfoliendicke beträgt.

5. Polyesterfolie nach einem der Ansprüche 1 bis 4, **dadurch gekennzeichnet, dass** das Titandioxid zu mindesten 80 % in der Rutilmodifikation vorliegt.

6. Polyesterfolie nach einem der Ansprüche 1 bis 5, **dadurch gekennzeichnet, dass** die Deckschichten weitere von $TiO_2$ verschiedene Weißpigmente in einer Menge von weniger als 6 Gew.-% (bezogen auf das Gewicht der jeweiligen Schicht) enthalten.

7. Polyesterfolie nach einem der Ansprüche 1 bis 6, **dadurch gekennzeichnet, dass** die weißen Deckschichten

zwischen 500 und 2000 ppm optischen Aufheller enthalten.

**8.** Polyesterfolie nach einem der Ansprüche 1 bis 7, **dadurch gekennzeichnet, dass** die Deckschichten mindestens einen von $TiO_2$ verschiedenen UV-Stabilisator enthalten.

**9.** Polyesterfolie nach einem der Ansprüche 1 bis 8, **dadurch gekennzeichnet, dass** der $d_{50}$-Wert des eingesetzten Rußes kleiner als 2 μm ist.

**10.** Polyesterfolie nach einem der Ansprüche 1 bis 9, **dadurch gekennzeichnet, dass** der Gehalt an Polycyclischen Aromatischen Kohlenwasserstoffen (PAK) in der Folie unterhalb 1,5 ppm liegt.

**11.** Polyesterfolie nach einem der Ansprüche 1 bis 10, **dadurch gekennzeichnet, dass** die Folie 0,5 bis 10 Gew.-% eines Flammschutzmittels, bevorzugt (6-Oxo-dibenzo-[c,e]-[1,2]-oxaphosphorin-6-ylmethyl)-bernsteinsäure-bis(2-hydroxyethyl)-ester, enthält, bevorzugt in einer Menge, dass der Anteil an Phosphor in der Folie bei 1500 bis 5000 ppm liegt.

**12.** Polyesterfolie nach einem der Ansprüche 1 bis 11, **dadurch gekennzeichnet, dass** sie eine oder mehrere der folgenden Eigenschaften aufweist:

- einen Schrumpf in Längs- und Querrichtung bei 150 °C von unter 3 %,
- eine Ausdehnung bei 100 °C von weniger als 3 %,
- einen E-Modul in beiden Folienrichtungen (MD und TD) von größer 3000 $N/mm^2$,
- F5-Werte in Längs- und Querrichtung von über 80 $N/mm^2$,
- einen Weißgrad nach Berger von mindestens 80,
- eine optische Dichte von mindestens 3,5,
- eine Reflektion mindestens einseitig bei 550 nm von größer oder gleich 70 %,
- eine Reflektion mindestens einseitig bei 370 nm von kleiner 60 %.

**13.** Verfahren zur Herstellung einer Polyesterfolie nach Anspruch 1, wobei zunächst das Polymere bzw. die Polymermischung der einzelnen Schichten in Extrudern komprimiert und zu Schmelzen verflüssigt wird, die Schmelzen dann in einer Mehrschichtdüse zu flachen Schmelzefilmen ausgeformt, durch eine Breitschlitzdüse gepresst und auf einer Kühlwalze und einer oder mehreren Abzugswalzen abgezogen werden, wobei die dabei geformte Folie abkühlt und sich verfestigt, die Folie dann simultan oder sequenziell in Längsrichtung und in Querrichtung verstreckt wird, anschließend thermofixiert wird und dann aufgewickelt wird, **dadurch gekennzeichnet, dass**

- die Deckschichten 4 bis 15 μm dick sind,
- die Gesamtfoliendicke 20 bis 60 μm beträgt,
- die Schichtdicke der Basisschicht ≥ der Summe der Deckschichtdicken ist,
- die Folie in allen Schichten Titandioxid als Weißpigment enthält,
- die weißen Deckschichten mindestens 15 und höchstens 35 Gew.-% $TiO_2$ enthalten,
- die Basisschicht mindestens 4 Gew.-% $TiO_2$ enthält,
- die rußhaltige Basisschicht 1 bis 8 Gew.-% Ruß enthält und
- der SV-Wert der Folie mindestens 600 und höchstens 950 beträgt.

**14.** Verwendung einer Polyesterfolie nach Anspruch 1 in Schattenmatten, Rollos, Jalousien, Projektionsleinwänden oder in Displays.

## Claims

**1.** An at least three-layer, biaxially oriented polyester film with two white outer layers and a carbon-black-filled base layer, where

- the thickness of the outer layers is from 4 to 15 μm,
- the total thickness of the film is from 20 to 60 μm
- the thickness of the base layer is ≥ the total of the thicknesses of the outer layers,
- the film comprises titanium dioxide as white pigment in all of the layers,
- the white outer layers comprise at least 15 and at most 35 % by weight of $TiO_2$,

- the base layer comprises at least 4 % by weight of $TiO_2$,
- the carbon-black-containing base layer comprises from 1 to 8 % by weight of carbon black, and
- the SV value of the film is at least 600 and at most 950, where all % by weight data are based on the weight of the respective layer.

**2.** The polyester film as claimed in claim 1, wherein the total thickness of the film is from 25 to 45 $\mu$m.

**3.** The polyester film as claimed in claim 1 or 2, wherein the base layer comprises at most 16 % by weight of white pigment.

**4.** The polyester film as claimed in any of claims 1 to 3, wherein the thickness of the base layer is at least 55 % of the total thickness of the film.

**5.** The polyester film as claimed in any of claims 1 to 4, wherein at least 80 % of the titanium dioxide is in the rutile form.

**6.** The polyester film as claimed in any of claims 1 to 5, wherein the outer layers comprise an amount of less than 6 % by weight (based on the weight of the respective layer) of further white pigments that differ from $TiO_2$.

**7.** The polyester film as claimed in any of claims 1 to 6, wherein the white outer layers comprise from 500 to 2000 ppm of optical brightener.

**8.** The polyester film as claimed in any of claims 1 to 7, wherein the outer layers comprise at least one UV stabilizer that differs from $TiO_2$.

**9.** The polyester film as claimed in any of claims 1 to 8, wherein the $d_{50}$ value of the carbon black used is smaller than 2 $\mu$m.

**10.** The polyester film as claimed in any of claims 1 to 9, wherein the content of polycyclic aromatic hydrocarbons (PAH) in the film is below 1.5 ppm.

**11.** The polyester film as claimed in any of claims 1 to 10, which comprises from 0.5 to 10 % by weight of a flame retardant, preferably bis(2-hydroxyethyl) 6-oxodibenzo[c,e][1,2]oxaphosphorin-6-ylmethyl-succinate, its amount preferably being such that the proportion of phosphorus in the film is from 1500 to 5000 ppm.

**12.** The polyester film as claimed in any of claims 1 to 11, which has one or more of the following properties:

- longitudinal and transverse shrinkage below 3 % at 150 °C,
- expansion of less than 3 % at 100 °C,
- modulus of elasticity greater than 3000 $N/mm^2$ in both directions on the film (MD and TD),
- longitudinal and transverse F5 values above 80 $N/mm^2$,
- Berger whiteness of at least 80,
- optical density of at least 3.5,
- reflectance greater than or equal to 70 % at 550 nm on at least one side,
- reflectance smaller than 60 % at 370 nm on at least one side.

**13.** A process for the production of a polyester film as claimed in claim 1, where the polymer or the polymer mixture for the individual layers is first compressed in extruders and plastified to give melts, the melts are then shaped in a coextrusion die to give flat melt films and forced through a flat-film die, and are drawn off on a chill roll and one or more take-off rolls, whereupon the film thus molded cools and solidifies, and the film is then simultaneously or sequentially oriented longitudinally and transversely, and then heat-set, and then wound up, which comprises the following features:

- the thickness of the outer layers is from 4 to 15 $\mu$m,
- the total thickness of the film is from 20 to 60 $\mu$m
- the thickness of the base layer is $\geq$ the total of the thicknesses of the outer layers,
- the film comprises titanium dioxide as white pigment in all of the layers,
- the white outer layers comprise at least 15 and at most 35 % by weight of $TiO_2$,
- the base layer comprises at least 4 % by weight of $TiO_2$,

- the carbon-black-containing base layer comprises from 1 to 8 % by weight of carbon black, and
- the SV value of the film is at least 600 and at most 950.

**14.** The use of a polyester film as claimed in claim 1 in blinds, including roller blinds, Venetian blinds, or projection screens, or in displays.

**Revendications**

**1.** Film de polyester biaxialement orienté avec au moins trois couches, dont deux couches de couverture blanches et une couche de base chargée de noir de carbone, dans lequel :

- les couches de couverture ont une épaisseur de 4 à 15 μm,
- l'épaisseur totale du film est de 20 à 60 μm,
- l'épaisseur de la couche de base est supérieure ou égale à la somme des épaisseurs des couches de couverture,
- le film contient dans toutes les couches du dioxyde de titane comme pigment blanc,
- les couches de couverture blanches contiennent au minimum 15 et au maximum 35 % en poids de $TiO_2$,
- la couche de base contient au moins 4 % en poids de $TiO_2$,
- la couche de base contenant du noir de carbone contient 1 à 8 % en poids de noir de carbone, et
- la valeur SV du film est au minimum de 600 et au maximum de 950, toutes les indications de % en poids se rapportant au poids de la couche respective.

**2.** Film de polyester selon la revendication 1, **caractérisé en ce que** l'épaisseur totale du film est de 25 à 45 μm.

**3.** Film de polyester selon la revendication 1 ou la revendication 2, **caractérisé en ce que** la couche de base contient au maximum 16 % en poids de pigment blanc.

**4.** Film de polyester selon l'une quelconque des revendications 1 à 3, **caractérisé en ce que** l'épaisseur de la couche de base est au minimum de 55 % de l'épaisseur totale du film.

**5.** Film de polyester selon l'une quelconque des revendications 1 à 4, **caractérisé en ce que** le dioxyde de titane est présent au minimum à 80 % dans la variante rutile.

**6.** Film de polyester selon l'une quelconque des revendications 1 à 5, **caractérisé en ce que** les couches de couverture contiennent d'autres pigments blancs différents de $TiO_2$ en quantité de moins de 6 % en poids (par rapport au poids de la couche respective).

**7.** Film de polyester selon l'une quelconque des revendications 1 à 6, **caractérisé en ce que** les couches de couverture blanches contiennent entre 500 et 2000 ppm d'azureur optique.

**8.** Film de polyester selon l'une quelconque des revendications 1 à 7, **caractérisé en ce que** les couches de couverture contiennent au moins un stabilisateur d'UV différent de $TiO_2$.

**9.** Film de polyester selon l'une quelconque des revendications 1 à 8, **caractérisé en ce que** la valeur $d_{50}$ du noir de carbone utilisé est plus petite que 2 μm.

**10.** Film de polyester selon l'une quelconque des revendications 1 à 9, **caractérisé en ce que** la teneur en hydrocarbures aromatiques polycycliques (PAK) se situe dans le film en dessous de 1,5 ppm.

**11.** Film de polyester selon l'une quelconque des revendications 1 à 10, **caractérisé en ce que** le film contient 0,5 à 10 % en poids d'un agent anti-flamme, de préférence le bis(2-hydroxyéthyl)ester de l'acide (6-oxo-dibenzo-[c,e]-[1,2] oxaphosphorin -6-ylméthyl)succinique, de préférence en quantité telle que la fraction de phosphore dans le film se situe à 1500 à 5000 ppm.

**12.** Film de polyester selon l'une quelconque des revendications 1 à 11, **caractérisé en ce qu'**il présente une ou plusieurs des propriétés suivantes :

- un retrait dans la direction longitudinale et dans la direction transversale à 150 °C de moins de 3 %,
- une dilatation à 100 °C de moins de 3 %,
- un module E dans les deux directions du film (sens machine et sens travers) de plus de 3000 $N/mm^2$,
- des valeurs F5 dans la direction longitudinale et la direction transversale de plus de 80 $N/mm^2$,
- un degré de blancheur selon Berger d'au moins 80,
- une densité optique d'au moins 3,5,
- une réflexion au moins d'un côté à 550 nm supérieure ou égale à 70 %, et
- une réflexion au moins d'un côté à 370 nm inférieure à 60 %.

**13.** Procédé de fabrication d'un film de polyester selon la revendication 1, dans lequel, au départ, le polymère ou le mélange de polymères des couches individuelles est ou sont comprimés dans des extrudeuses et liquéfiés en masse(s) fondue(s), les masses fondues sont conformées en films fondus plats dans une buse multicouche, pressées par une buse à fente large et tirées à travers un cylindre de refroidissement et un ou plusieurs cylindres délivreurs, si bien que le film ainsi formé est refroidi et se solidifie, le film est simultanément ou en séquence étiré dans la direction longitudinale et dans la direction transversale, il est ensuite thermofixé, puis enroulé, **caractérisé en ce que** :

- les couches de couverture ont une épaisseur de 4 à 15 $\mu m$,
- l'épaisseur totale du film est de 20 à 60 $\mu m$,
- l'épaisseur de la couche de base est supérieure ou égale à la somme des épaisseurs des couches de couverture,
- le film contient dans toutes les couches du dioxyde de titane comme pigment blanc,
- les couches de couverture blanches contiennent au minimum 15 et au maximum 35 % en poids de $TiO_2$,
- la couche de base contient au moins 4 % en poids de $TiO_2$,
- la couche de couverture contenant du noir de carbone contient 1 à 8 % en poids de noir de carbone, et
- la valeur SV du film est au minimum de 600 et au maximum de 950.

**14.** Utilisation d'un film de polyester selon la revendication 1 dans des nattes d'ombrage, des stores, des jalousies, des écrans de projection ou des affichages.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 63220421 A
- US 20070054141 A
- DE 2346787 A
- DE 69731750
- WO 9806575 A